# EUROPEAN PATENT APPLICATION

(11) **EP 2 182 581 A1**
(43) Date of publication of application: **05.05.2010**
(21) Application number: 08859665.5
(22) Date of filing: 05.12.2008
(51) Int. Cl.: H01Q 1/50, G06K 19/07, G06K 19/077, H01P 1/30, H01Q 1/52, H01Q 3/01, H01Q 9/14, H04B 5/02

(54) **RFID TAG, AND SYSTEM AND METHOD FOR DETECTING CHANGE OF RFID TAG ENVIRONMENT**

(30) Priority: 10.12.2007 JP 2007318741
(71) Applicant: Omron Corporation, Kyoto-shi, Kyoto 600-8530 (JP)
(72) Inventor: KASAI, Hirokazu, Kyoto-shi Kyoto 600-8530 (JP); NOGAMI, Hidekatsu, Kyoto-shi Kyoto 600-8530 (JP)
(74) Representative: Wilhelms · Kilian & Partner Patentanwälte
(86) International application number: PCT/JP2008/072117
(87) International publication number: WO 2009/075226

(57) **Abstract**

Provided is an RFID tag suitable for detecting a change of the RFID tag environment in real time by a simple and low-cost system. The system and the method for detecting a change of the RFID tag environment are also provided. An RFID tag (2) is provided with an antenna (20), a wireless communication IC (21) for transmitting/receiving radio waves through the antenna (20), and an element (22A) of which characteristics change corresponding to a change of the physical quantity of the RFID tag environment. Gain of the antenna (20) changes due to a change of the characteristics of the element (22A). When the environment of the RFID tag (2) changes, gain of the antenna (20) is reduced or increased by the element (22A). Thus, the RFID tag (2) is brought into a state where answering waves (ANS) to interrogation waves (RQ) transmitted from a tag communication device (3) can be transmitted and into a state where such waves cannot be transmitted, and the change of the environment of the RAID tag (2) can be detected in real time, depending on whether the answering waves (ANS) are received or not.

## Description

### TECHNICAL FIELD

The present invention relates to an RFID tag suitable for detecting change of RFID tag environment in real time, and system and method for detecting change of RFID tag environment.

### BACKGROUND ART

An RFID tag communication system for performing wireless communication through a radio waves between an RFID tag and a tag communication device is known. In this type of RFID communication system, various means for transmitting the change of the RFID tag environment to the tag communication device in real time are being reviewed, and among them, a common method is to use an active type RFID tag.

However, the active type RFID tag needs to incorporate a power supply such as a battery and also needs to have peripheral circuits, and thus the circuit configuration inevitably becomes complex and high cost, and the problem of battery lifespan also arises.

The change of the RFID tag environment can be transmitted to the tag communication device in real time by using the active type RFID tag. However, a simple and low-cost means, as much as possible, is desired for the transmission of simple change such as whether or not the RFID tag environment exceeded a constant temperature or whether or not an article is placed at a predetermined position. Since the active type RFID tag has excessive functions and is high-cost, the state of the RFID tag environment cannot be acquired simply and at low-cost with the method using the active type RFID tag.

A passive type RFID tag does not incorporate a power supply such as a battery, and operates by the power transmitted from the tag communication device in radio waves, and hence the circuit configuration is relatively simple and the cost is relatively low compared to the active type RFID tag. However, the change of the RFID tag environment cannot be acquired in real time using the passive type RFID tag since the information obtained through communication with the passive type RFID type is merely information written to the RFID tag beforehand.

Patent document 1 discloses a technique of detecting the movement of resource using an RFID tag (20). This technique disconnects one part of the antenna of the RAID tag (20) when the RFID tag (20) is stripped by the movement of the resource to change the resonance frequency of such antenna. The movement of the resource is detected by detecting the change of the resonance frequency with a tag reader (26) (see P1 of patent document 1).

However, the same tag reader (26) may not be able to communicate with the RFID tag (20) if the resonance frequency of the antenna of the RFID tag (20) changes as in patent document 1. The change of the RFID tag (20) environment, specifically, the movement of the resource cannot be reliably detected in the technique of patent document 1 since whether or not the resonance frequency is changed cannot be known if communication cannot be made with the RFID tag (20).

Patent document 2 discloses a technique of enabling communication only with the RFID tag desired to be communicated by irradiating the RFID tag desired to be communicated of a plurality of RFID tags in a communicable region with light etc., but does not disclose detecting the change of the RFID tag environment in real time.

Patent document 1: Japanese Unexamined Patent Publication No, 2007-148831

Patent document 1: Japanese Unexamined Patent Publication No. 2007-102712

### DISCLOSURE OF THE INVENTION

### PROBLEMS TO BE SOLVED BY THE INVENTION

The present invention has been devised to solve the problems described above, and an object thereof is to provide an RFID tag suitable for detecting a change of the RFID tag environment in real time by a simple and low-cost system, and a system and method for detecting a change of the RFID tag environment.

In order to achieve the above objects, an RAID tag according to the present invention incudes an antenna and a wireless communication IC for transmitting and receiving radio waves through the antenna; the RFID tag including: an element of which characteristics change according to change of a physical quantity of an RFID tag environment, a gain of the antenna changing according to the change of the characteristics of the element.

A system for detecting a change of an RFID tag environment according to the present invention includes: an RAID tag including an antenna, a wireless communication IC for transmitting and receiving radio waves through the antenna, and an element of which characteristics change according to change of a physical quantity of the RFID tag environment, a gain of the antenna changing according to the change of the characteristics of the element; a tag communication device for transmitting interrogation waves to the RFID tag and receiving answering waves from the RFID tag with respect to the interrogation waves; and detection means for detecting the state of the RFID tag environment based on a communication result of the RFID tag and the tag communication device.

The method for detecting a change of the RFID tag environment according to the present invention is a method for detecting a state of the RFID tag environment using an RFID tag, which includes an antenna and a wireless communication IC for transmitting and receiving radio waves through the antenna and which is attached with an element having characteristics in which an impedance changes according to change of a physical quantity of the environment; and a tag communication device for transmitting interrogation waves to the RFID tag and receiving answering waves from the RFID tag with respect to the interrogation waves, where the detection method includes having the RFID tag to a state of transmitting or to a state of not transmitting the answering wave with respect to the interrogation wave from the tag communication device when the gain of the antenna changes according to the change of the characteristics of the element, and monitoring the answering waves from the RFID tag and detecting the change of the RFID tag environment from the presence of reception of the answering wave.

The "physical quantity of the RFID tag environment" refers to a quantity objectively measured by a physical measurement means such as temperature, humidity, atmospheric pressure, and the like of the RFID tag environment.

The element includes an element having characteristics in which an impedance changes according to the change of the physical quantity of the RFID tag environment; and a matching state of the impedance of the antenna and the impedance of the wireless communication IC changes, and the gain of the antenna changes according to the change of the characteristics of the element.

The "element having characteristics in which the impedance changes" includes a temperature sensor such as a PTC thermistor and an NTC thermistor in which the impedance characteristics change according to temperature change, a pressure sensor and an inclination sensor (acceleration sensor) such as a piezo element in which the impedance characteristics change according to pressure change, and various types of sensors such as an element having characteristics in which the impedance changes according to change of the physical quantity other than temperature and pressure. The temperature sensor is attached to the antenna so as to be in parallel with the wireless communication IC. Other sensors are similarly attached.

If the temperature sensor is used as one example of the element, the temperature change can be detected in real time as the change of the RFID tag environment. If the inclination sensor (acceleration sensor) is used, change in inclination of the member attached with the RFID tag can be detected in real time as the change of the RFID tag environment, and an operation for compensating for such amount of change may be performed to maintain the polarization plane of the RFID tag to the constantly set angle.

The RFID tag according to the present invention is an RFID tag including an antenna and a wireless communication IC for transmitting and receiving radio waves through the antenna, wherein the RFID tag includes a metal member removably attached to the antenna according to displacement of a member, to which the antenna is attached, and the gain of the antenna changes by attachment and detachment of the metal member.

A system for detecting change of an RFID tag environment according to the present invention includes: an RFID tag including an antenna, a wireless communication IC for transmitting and receiving radio waves through the antenna, and a metal member removably attached to the antenna according to displacement of a member attached with the antenna, a gain of the antenna changing by attachment and detachment of the metal member; a tag communication device for transmitting interrogation waves to the RFID tag and receiving answering waves from the RFID tag with respect to the interrogation waves; and detection means for detecting the state of the RFID tag environment based on a communication result of the RFID tag and the tag communication device.

A method for detecting a change of an RFID tag environment according to the present invention is a method for detecting a change of an RFID tag environment using an RFID tag, including an antenna and a wireless communication IC for transmitting and receiving radio waves through the antenna, a tag communication device for transmitting interrogation waves to the RFID tag and receiving answering waves from the RFID tag with respect to the interrogation waves, and a metal member removably attached to the antenna according to displacement of a member attached with the antenna; the detection method including the steps of: having the RFID tag to a state of transmitting and to a state of not transmitting the answering wave with respect to the interrogation wave from the tag communication device when the gain of the antenna changes by attachment and detachment of the metal member to the antenna; and monitoring the answering wave from the RFID tag and detecting the change of the RFID tag environment from presence of reception of the answering wave.

The "metal member" may be the same material as the antenna of the RFID tag or may be a different material, and a reed shaped metal foil made of aluminum may be used. The frequency characteristics of the antenna do not change, and only the gain of the antenna changes even if the metal member is attached to the antenna of the RFID tag.

As a method of "removably attaching the metal member to the antenna", the antenna and the metal member are attached to different members. There may be adopted a method in which the antenna and the metal member contact With each other when the two members are relatively approached, and the antenna and the metal member are separated when the two members are relatively. One example of such method incudes separately attaching the antenna and the metal member to two members such as the door and the front of the door. Specifically, the RFID tag is attached to the door, and the metal member is attached to the front of the door, so that the antenna and the metal member contact with each other when the door is dosed and separate when the door is opened. In this case, the metal member is removably attached to the antenna according to the displacement (either open position or close position) of the door.

The "RFID tag" includes a passive type RFID tag that does not include a power supply such as a battery and that wirelessly communicates with the reader/writer when the circuit operates by the power supplied from the reader/writer by radio waves, or an active type RFID tag that includes a power supply such as a battery.

The "tag communication device" includes an RFID reader/writer for reading and writing data with respect to the RFID tag, and an RFID reader for only reading out data from the RFID tag.

### EFFECTS OF THE INVENTION

In the present invention, for the configuration of the RFID tag, there are adopted a configuration including an element of which characteristics change according to change of a physical quantity of the RFID tag environment, where the gain of the antenna of the RFID tag changes according to the change of the characteristics of the element, or a configuration including a metal member removably attached to the antenna according to displacement of a member, to which the antenna of the RFID tag is attached, where the gain of the antenna of the RFID tag changes according to attachment and detachment of the metal member, Thus, the RFID tag can be in a state of transmitting or not transmitting the answering wave with respect to the interrogation wave from the tag communication device when the gain of the antenna lowers or increases with change of the environment. Therefore, even when using the passive type RFID tag having a simple circuit configuration and of low cost, the answering wave thereof can be monitored, and the change of the RAID tag environment can be detected in real time from the presence of reception of the answering wave.

The present invention adopts the method of changing the gain of the antenna instead of changing the resonance frequency of the antenna of the RFID tag as in patent document 1, and thus the drawback in that communication with the RFID tag cannot be made due to change of the resonance frequency of the antenna does not occur, and the RFID tag environment can be reliably detected.

Such effects are similarly obtained with the active type RFID tag, but the present invention is suitably applied to the passive type RFID tag when detecting the RFID tag environment in real time with a simple and low-cost method as the circuit configuration is simpler and the cost is lower in the passive type RFID tag.

### BRIEF DESCRIPTION OF THE DRAWING

Fig. 1 is an explanatory view of one embodiment of an RFID tag communication system applied with the present invention.
Fig. 2 is a block diagram of a wireless communication IC.
Fig. 3 is an explanatory view of the impedance characteristics with respect to the temperature of the PTC thermistor, and a lower limit value and an upper limit value of the impedance at which the operation power of the wireless communication IC can be ensured.
Fig. 4 is a block diagram of the tag communication device.
Fig. 5(a) is a flowchart showing the processing operation in the tag communication device, and (b) is a flowchart showing the processing operation in the high-order computer.
Fig. 6 is an explanatory view of the main parts of another embodiment of the RFID tag communication system applied with the present invention.
Fig. 7(a) is an explanatory view showing another attachment and detachment configuration example of the metal member, and is a view showing a state before the metal member is cut, and (b) is a view showing a state after the metal member is cut.

### DESCRIPTION OF SYMBOLS

- 2: RFID tag
- 3: tag communication device
- 31: external communication unit
- 32: communication control unit
- 33: transmission unit
- 34: reception unit
- 35: antenna
- 4: high-order computer
- 20: antenna
- 20A, 20B: antenna element
- 20C: power supply unit
- 21: wireless communication IC
- 211: power supply unit
- 212: wireless processing unit
- 213: control unit
- 214: memory
- 22A: element
- 22A₁: PTC thermistor
- 22B: metal member
- ANS: answering wave
- RQ: interrogation wave

### BEST MODE FOR CARRYING OUT THE INVENTION

Best modes for carrying out the invention will be hereinafter specifically described with reference to the accompanying drawings.

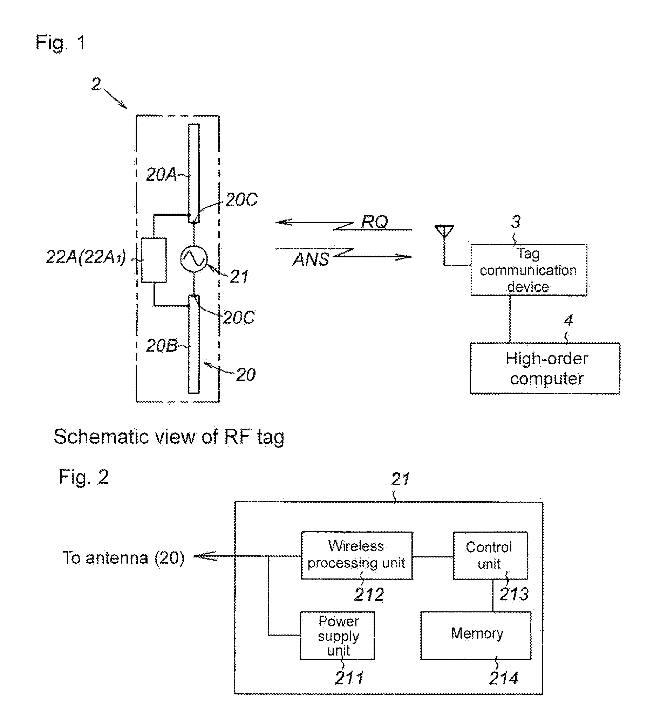

Fig. 1 is an explanatory view of one embodiment of an RFID tag communication system applied with the present invention.

As shown in Fig. 1. the RFID communication system includes an RFID tag 2 placed at an area to detect the change in state, a tag communication device 3 for wirelessly communicating with the RFID tag 2 through radio waves to transmit an interrogation wave RQ to the RFID tag 2 and receive an answering wave ANS from the RFID tag 2 with respect to the interrogation wave RQ, and a high-order computer 4, and detects temperature change as change of the RFID tag 2 environment.

### <Description of RFID tag 2>

The RFID tag 2 is configured to include an antenna 20, a wireless communication IC 21 for transmitting and receiving radio waves through the antenna 20, and an element 22A of which characteristics change according to change of a physical quantity of the RFID tag 2 environment

The antenna 20 has a structure in which each power supply portion 20C, 20C of two antenna elements 20A, 20B is connected to a power supply terminal of the wireless communication IC 21. The antenna 20 is used to communicate with the tag communication device 3 such as to receive the interrogation wave RQ from the tag communication device 3 and to transmit the answering wave ANS with respect to the interrogation wave RQ to the tag communication device 3.

The wireless communication IC 21 performs the process of transmitting the answering wave ANS with respect to the interrogation wave RQ of the tag communication device 3 from the antenna 20 to the tag communication device 3, the process of storing the data from the tag communication device 3 based on a signal received from the tag communication device 3 through the antenna 20 and transmitting the stored data from the antenna 20 to the tag communication device 3, and the like. The wireless communication IC 21 is configured to include a power supply unit 211, a wireless processing unit 212, a control unit 213, and a memory 214, as shown in Fig. 2.

The power supply unit 211 rectifies the induced voltage generated when the antenna 20 receives the interrogation wave RQ of the tag communication device 3 with a rectifier circuit, adjusts the rectified voltage to a predetermined voltage with a power supply circuit, and then supplies the resultant to each unit of the wireless communication IC 21. A bridge diode, a voltage adjustment capacitor, and the like are used for the power supply unit 211.

The wireless processing unit 212 performs the process of converting the wireless signal of the radio wave received through the antenna 20 to the original data format, the process of transmitting the converted data to the control unit 213, the process of converting the data received from the control unit 213 to a format suited for wireless transmission, and the process of transmitting the converted wireless signal to the outside from the antenna 20. An A/D (Analog to Digital) conversion circuit, a D/A (Digital to Analog) conversion circuit, a modulation/demodulation circuit, an RF circuit, and the like are used for the wireless processing unit 212.

The control unit 213 comprehensively controls the operation of various types of configurations described above in the wireless communication IC 21. The control unit 213 includes a logical operation circuit, a register, and the like, and functions as a computer. The operation control of various types of configurations is implemented by having the computer execute the control program. The program may be in a form of being installed to a ROM (Read Only Memory) and the like of the memory 214 and used by being read out, or may be in a form of being downloaded from the tag communication device 3 through the antenna 20 and the wireless processing unit 212, installed in the memory 214, and then executed.

In particular, the control unit 213 performs the process of storing the data from the tag communication device 3 to the memory 214, and the process of reading out the data stored in the memory 214 and transmitting the same to the tag communication device 3 through the wireless processing unit 212 and the antenna 20 based on the data received from the tag communication device 3 through the antenna 20 and the wireless processing unit 212.

The memory 214 is configured by the ROM, and a semiconductor memory such as a SRAM (Static RAM), a FeRAM (ferroelectric memory), and the like. The content stored in the memory 214 includes the control program and various other types of programs, as well as various types of data such as ID. The wireless communication IC 21 desirably uses a nonvolatile memory such as the ROM and a memory with small power consumption such as the SRAM and the FeRAM since the radio waves transmitted from the tag communication device 3 are used as the power source.

As described above, the element 22A includes an element having characteristics in which the impedance changes according to change of the physical quantity (temperature change in the present embodiment) of the RFID tag 2 environment, where the matching state of the impedance of the antenna 20 and the impedance of the wireless communication IC 21 changes and the gain of the antenna 20 changes with change of the impedance of the element 22A.

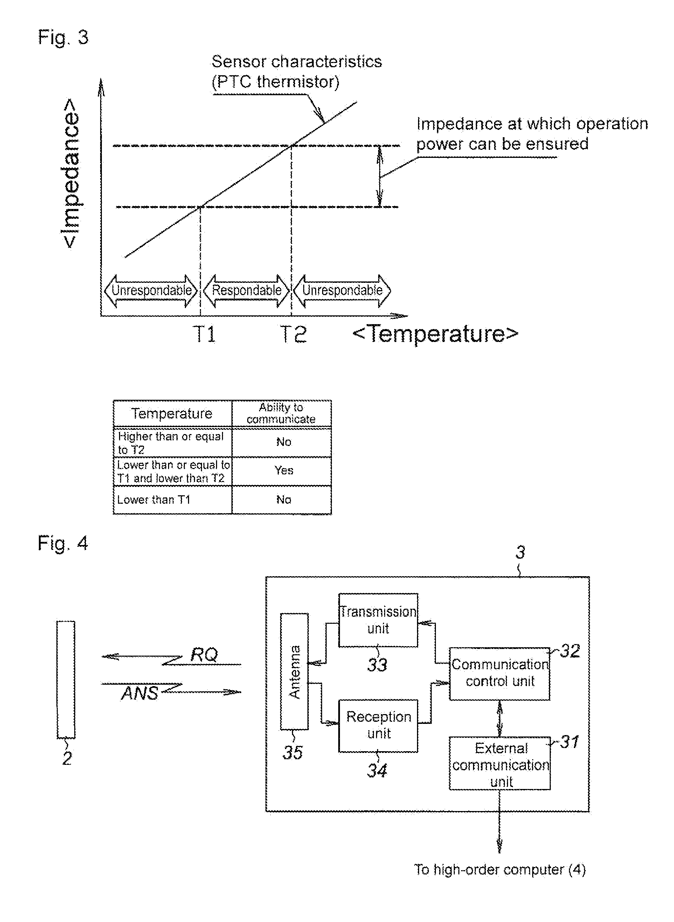

Specifically, the element 22A includes a PTC thermistor 22A₁ attached to the antenna 20 so as to be in parallel with the wireless communication IC 21. The impedance characteristics of the PTC thermistor 22A₁ are positive characteristics with respect to temperature as in Fig 3, where the impedance of the PTC thermistor 22A₁ becomes higher the higher the temperature and the impedance of the PTC thermistor 22A₁ becomes lower the lower the temperature.

In the present embodiment, the matching state of the impedance of the antenna 20 and the impedance of the wireless communication IC 21 changes as the impedance of the PTC thermistor 22A₁ changes by temperature. The gain of the antenna 20 becomes larger the higher the impedance of the PTC thermistor 22A₁, and the gain of the antenna 20 becomes smaller the lower the impedance of the PTC thermistor 22A₁.

In the RFID tag 2, the antenna gain capable of collecting the operation power by the interrogation waves (radio waves) of the tag communication device 3 is required to operate the wireless communication IC 21. In the present embodiment, the impedance of the PTC thermistor 22A₁ changes as in Fig. 3 according to the change of the temperature of the RFID tag 2 environment, and hence the impedance matching state changes. Thus, when the temperature of the RFID tag 2 environment becomes lower than or equal to a constant temperature, the RFID tag 2 cannot collect the operation power due to lowering of the gain of the antenna 20 and thus becomes unrespondable.

In Fig. 3, the lower limit value and the upper limit value of the impedance at which the operation power of the wireless communication IC 21 can be ensured are shown with a dotted line, and it is also shown that the RFID tag 2 is unrespondable if the temperature of the RFID tag 2 environment is lower than T1, that the RFID tag 2 is respondable if the temperature of the RFID tag 2 environment is higher than or equal to T1 and lower than T2, and that the RFID tag 2 is unrespondable if the temperature of the RFID tag 2 environment is higher than or equal to T2.

When referring to "the RFID tag 2 is unrespondable", this means that the operation power of the wireless communication IC 21 cannot be collected by the interrogation wave RQ of the tag communication device 3, and the RFID tag 2 cannot transmit the answering wave ANS with respect to the interrogation wave RQ. When referring to "the RFID tag 2 is respondable", this means that the operation power of the wireless communication IC 21 can be collected by the interrogation wave RQ of the tag communication device 3, and the RFID tag 2 can transmit the answering wave ANS with respect to the interrogation wave RQ.

### <Description of tag communication device 3>

Fig. 4 is a block diagram of the tag communication device. The tag communication device 3 includes an external communication unit 31, a communication control unit 32, a transmission unit 33, a reception unit 34, and an antenna 35, and wirelessly communicates by radio waves with the RFID tag 2 through the antenna 35.

The external communication unit 31 transmits the communication result between the tag communication device 3 and the RFID tag 2 to the high-order computer 4. The communication result contains information related to the communication status between the tag communication device 3 and the RFID tag 2 such as whether or not the answering wave ABS of the RFID tag 2 is received, information of the ID (Identification) read out from the RFID tag 2, information indicating whether or not the write from the tag communication device 3 to the RFID tag 2 is successful, and the like. The external communication unit 31 is configured to receive the write information (transmission command information) from the high-order computer 4 with respect to the RFID tag 2 and the command (instruction) from the high-order computer 4.

The communication control unit 32 receives the transmission command information transmitted from the high-order computer 4 through the external communication unit 31, and transmits the same to the transmission unit 33.

The transmission unit 33 converts the transmission command information transmitted from the communication control unit 32 to a format suited for wireless transmission, and transmits the converted wireless signal (transmission command) to the outside from the antenna 35, and performs processes such as modulation and amplification on the transmission command information.

The reception unit 34 converts the wireless signal (reception data) received through the antenna 35 to the original format, and transmits the converted data to the communication control unit 32, and performs processes such as amplification and demodulation on the reception data.

### <Outline of high-order computer 4>

The high-order computer 4 is configured by a personal computer etc., and has a function serving as a means for sending various types of commands such as a command to start reading out data with respect to the tag communication device 3, and a function serving as a means (detection means) for detecting change of the RFID tag 2 environment based on the communication result received from the tag communication device 3.

### <Overall processing operation of RFID tag communication system>

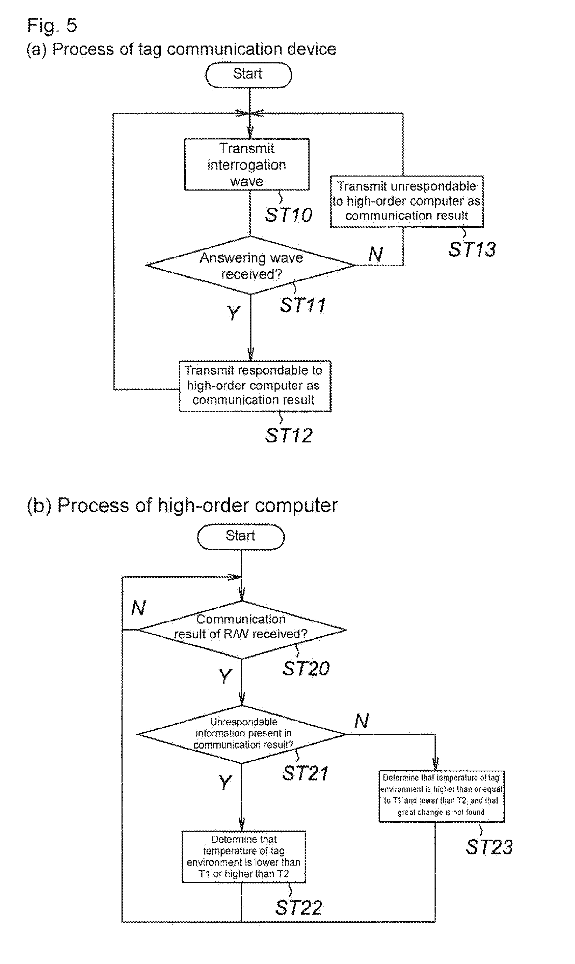

The overall processing operation of the RFID tag communication system will now be described based on the flowcharts of Figs. 5(a) and 5(b). Fig. 5(a) is a flowchart showing the processing operation in the tag communication device, where the processing operation of the tag communication device starts by turning ON the power of the tag communication device. Fig. 5(b) is a flowchart showing the processing operation in the high-order computer, where the processing operation of the high-order computer starts in cooperation with the power ON of the tag communication device. In the following description, the temperature range of higher than or equal to T1 and lower than T2 shown in Fig. 3 is assumed as the default temperature range, and the temperature range of lower than T1 and higher than or equal to T2 is assumed as the temperature range outside the default.

When the power is turned ON, the tag communication device 3 first transmits the interrogation wave RQ towards the RFID tag 2 (ST10), and determines whether or not the answering wave ANS from the RFID tag 2 with respect to the interrogation wave RQ is received (ST11).

If the answering wave ANS is received within a default time in ST11, the tag communication device 3 transmits the respondable fact (answering wave ANS is received) to the high-order computer 4 as the communication result with the RFID tag 2 (Y of ST11, ST12), and returns to the process of ST10. If the answering wave ANS is not received within the default time, the tag communication device 3 outputs the unrespondable fact (answering wave ANS not received) to the high-order computer 4 as the communication result with the RFID tag (N of ST11, ST13), and returns to the process of ST10. The processes of ST10 to ST13 are repeatedly executed until the power of the tag communication device 3 is turned OFF.

In the high-order computer 4, whether or not the communication result of the tag communication device 3 is received is determined in cooperation with the power ON of the tag communication device (ST20). If the communication result of the tag communication device 3 is not received, the process of ST20 is re-executed to wait for the reception of the communication result. If the communication result of the tag communication device 3 is received, whether or not the unrespondable information is present in the communication result is determined (Y of ST20, ST21).

If the unrespondable information is present in the communication result in ST21, the high-order computer 4 determines that the temperature of the RFID tag 2 environment is lower than T1 or higher than or equal to T2 (ST22), and informs that the temperature of the RFID tag 2 environment is outside the default range by operating a red revolving light or ringing a buzzer.

If the unrespondable information is not present in the communication result, that is, if the respondable information is present in step ST21, the high-order computer 4 determines that the temperature of the RFID tag 2 environment is within the default range of higher than or equal to T1 and lower than T2 (ST23), and informs that the temperature of the RFID tag 2 environment is within the default range by lighting a green light, and the like.

In the embodiment described above, the change related to the temperature of the RFID tag 2 environment is detected in the high-order computer 4, but the function of detecting change may be provided to the tag communication device 3.

A measurement means for measuring the reception level can also be added to the tag communication device 3. The measurement means may constantly measure the reception level of the answering wave ANS of the RFID tag 2 and continuously detect the change related to the temperature of the RFID tag 2 environment based on the time-series data of the measurement values. In this case, the relative temperature change can be detected from the temporal change of the reception level, but calibration is required beforehand when desiring absolute accuracy.

In the above-described embodiment, the RFID tag 2 that is unrespondable at the temperature of lower than T1 or the temperature higher than or equal to T2 is used, but the temperature of the RFID tag environment can be detected in a step-wise manner by using a plurality of RFID tags 2 having different unrespondable temperatures.

In the above-described embodiment, the PTC thermistor 22A₁ is used for the element 22A₁ but an NTC thermistor having negative impedance characteristics, on the contrary, may be used.

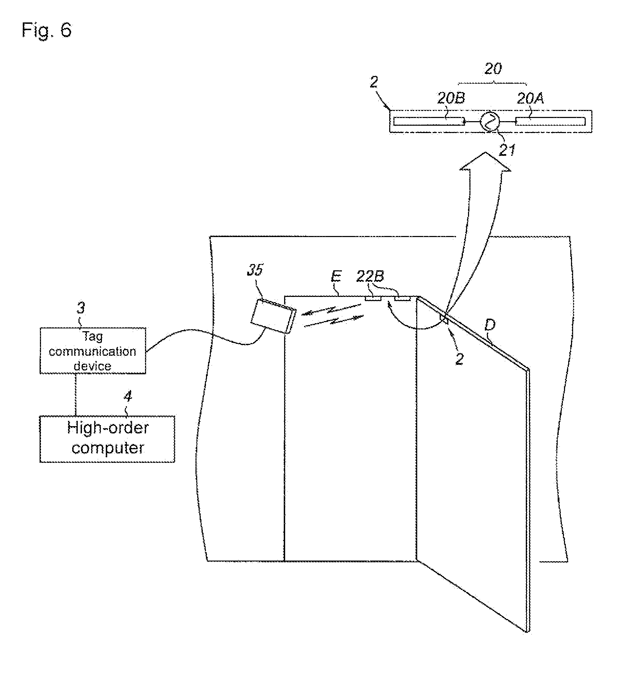

Fig. 6 is an explanatory view showing the main parts of another embodiment of the RFID tag communication system applied with the present invention.

The RFID tag communication device of Fig. 6 detects the opening and the closing of a door D attached with the RFID tag as change of the RFID tag 2 environment. The basic configuration of the RFID tag communication system is similar to the previously described RFID tag communication system of Fig. 1, and thus the detailed description thereof will be omitted by applying the same reference numerals to the same members.

The RFID tag 2 used in the RFID tag communication system is configured to include the wireless communication IC 21 for transmitting and receiving the radio waves through the antenna 20, and a metal member 22B removably attached to the antenna 20 according to the displacement of the member (door D in the present embodiment) attached with the antenna 20.

The metal member 22B is attached to a front E of the non-metal door D. The door D is attached with the antenna 20 and the wireless communication IC 21 of the RFID tag 2. That is, the metal member 22B is installed near the member attached with the antenna 20. The metal member 22B is removably attached to the antenna 20 with the relative position with respect to the antenna 20 changing according to the displacement of the door D (either open position or close position), and changes the gain of the antenna 20.

The metal member 22B may be the same material as the antenna 20 or may be a different material and a reed shaped metal foil made of aluminum may be used. The frequency characteristics of the antenna 20 do not change even if the metal member 22B is attached to the antenna 20.

In the RFID tag communication system, the antenna 20 of the RFID tag 2 and the metal member 22B contact with each other when the door D is closed, so that the antenna gain increases thereby configuring the antenna of a gain communicable with the tag communication device 3, whereby the RFID tag 2 and the tag communication device 3 can communicate with each other That is, the interrogation waves RQ and the answering waves ANS can be exchanged between the tag communication device 3 and the RFID tag 2.

When the door D is opened as in Fig. 6, the antenna 20 of the RFID tag 2 and the metal member 22B separate from each other, so that the matching state changes and the antenna gain lowers, whereby the RFID tag 2 and the tag communication device 3 cannot communicate. That is, the answering wave ANS is not returned from the RFID tag 2 even if the interrogation wave RQ is transmitted from the tag communication device 3.

In other words, the RFID tag 2 of Fig. 5 also includes the antenna 20 similar to the RFID 2 of Fig. 1, and thus has a normal function of communicating with the outside. However, in the case of the RFID tag 2 of Fig. 5, the antenna gain necessary for the communication with the tag communication device 3 lacks with only the antenna 20. This lack is compensated by the metal member 22B. The metal member 22B increases the gain of the antenna 20 by contacting the antenna 20 of the RFID tag 2 thereby enacting the communication of the RFID tag 2 and the tag communication device 3.

In the RFID tag communication system of Fig. 5 as well, the communication result of the RFID tag 2 and the tag communication device 3 is transmitted from the tag communication device 3 to the high-order computer 4. The content of the communication result is the "respondable" information if the answering wave ANS of the RFID tag 2 is received by the tag communication device 3, and "unrespondable" information if not received.

Therefore, the opening and the closing of the door D can be detected based on the "respondable" or the "unrespondable" information in the high-order computer 4. The process related to such detection includes detecting whether or not the information transmitted from the tag communication device 3 is "respondable", and assuming the door D is closed if the information is the "respondable" information and assuming the door D is opened if the information is the "unrespondable" information and not the "respondable" information.

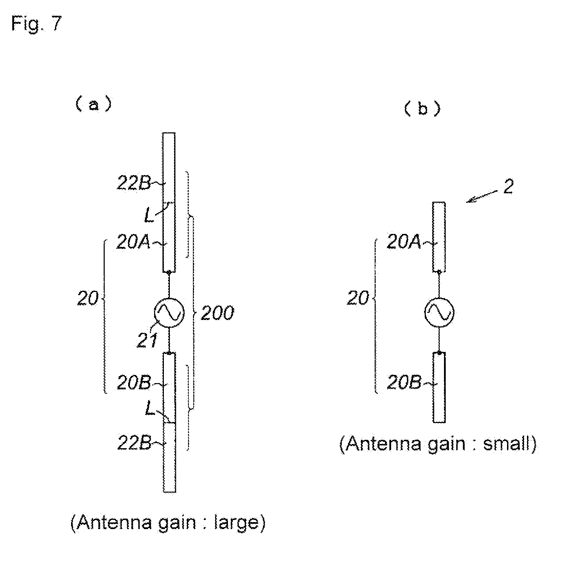

Fig. 7 is an explanatory view showing another attachment and detachment configuration example of the metal member 22B. In the attachment and detachment configuration example of Fig. 7, a cut line L such as a perforated line is formed in the antenna (e.g., entire length of antenna = λ/2) 200 having a large gain as in Fig. 7(a), where one side of the cut line L is used as the antenna 20 of the RFID tag 20 and the other side is used as the metal member 22B. If the antenna 200 is cut at the cut line L, as in Fig. 7(b), the antenna 20 of the RFID tag 2 becomes an antenna (e.g., entire length of antenna=λ/4) having a small gain.

Therefore, one side of the cut line L, that is, the wireless communication IC 21 and the antenna 20 of the RFID tag 2 are attached to a fixing member, and the other side of the cut line L, that is, the metal member 22B is attached to another member having a possibility of moving from the fixing member. With this, the RFID 2 becomes unrespondable as the antenna gain lowers when the other member moves and the antenna 200 is cut at the cut line L. Thus, the movement of another member can be detected as the change of the RFID tag 2 environment. When the other member returns to the original position, the antenna 200 will be reconfigured, and the RFID tag 200 becomes respondable as the antenna gain increases. Therefore, detection can be made that the other member returned to the original position.

## Claims

1. An RFID tag including an antenna and a wireless communication IC for transmitting and receiving radio waves through the antenna; the RFID tag comprising:
an element of which characteristics change according to change of a physical quantity of an RFID tag environment, a gain of the antenna changing according to the change of the characteristics of the element.

2. The RFID tag according to claim 1, wherein
the element includes an element having characteristics in which an impedance changes according to the change of the physical quantity of the RFID tag environment; and
a matching state of the impedance of the antenna and the impedance of the wireless communication IC changes, and the gain of the antenna changes according to the change of the characteristics of the element.

3. The RFID tag according to claim 2, wherein the element is a temperature sensor including a PTC thermistor or an NTC thermistor attached to the antenna to be in parallel with the wireless communication IC.

4. An RFID tag including an antenna and a wireless communication IC for transmitting and receiving radio waves through the antenna; the RFID tag comprising:
a metal member removably attached to the antenna according to displacement of a member attached with the antenna, a gain of the antenna changing by attachment and detachment of the metal member.

5. A system for detecting a change of an RFID tag environment, the system comprising:
an RFID tag including an antenna, a wireless communication IC for transmitting and receiving radio waves through the antenna, and an element of which characteristics change according to change of a physical quantity of the RFID tag environment, a gain of the antenna changing according to the change of the characteristics of the element;
a tag communication device for transmitting interrogation waves to the RFID tag and receiving answering waves from the RFID tag with respect to the interrogation waves; and
detection means for detecting the state of the RFID tag environment based on a communication result of the RFID tag and the tag communication device.

6. The system for detecting the change of the RFID tag environment according to claim 5, wherein
the element includes an element having characteristics in which an impedance changes according to the change of the physical quantity of the RFID tag environment; and
a matching state of the impedance of the antenna and the impedance of the wireless communication IC changes, and the gain of the antenna changes according to the change of the characteristics of the element.

7. The system for detecting the change of the RFID tag environment according to claim 6, wherein the element is a temperature sensor including a PTC thermistor or an NTC thermistor attached to the antenna to be in parallel with the wireless communication IC.

8. A system for detecting change of an RFID tag environment, the system comprising:
an RFID tag including an antenna, a wireless communication IC for transmitting and receiving radio waves through the antenna, and a metal member removably attached to the antenna according to displacement of a member attached with the antenna, a gain of the antenna changing by attachment and detachment of the metal member;
a tag communication device for transmitting interrogation waves to the RFID tag and receiving answering waves from the RFID tag with respect to the interrogation waves; and
detection means for detecting the state of the RFID tag environment based on a communication result of the RFID tag and the tag communication device.

9. A method for detecting a change of an RFID tag environment using an RFID tag, including an antenna and a wireless communication IC for transmitting and receiving radio waves through the antenna and being attached with an element having characteristics in which an impedance changes according to change of a physical quantity of the environment, and a tag communication device for transmitting interrogation waves to the RFID tag and receiving answering waves from the RFID tag with respect to the interrogation waves: the detection method comprising the steps of:
having the RFID tag to a state of transmitting and to a state of not transmitting the answering wave with respect to the interrogation wave from the tag communication device when the gain of the antenna changes according to the change of characteristics of the element; and
monitoring the answering wave from the RFID tag and detecting the change of the RFID tag environment from presence of reception of the answering wave.

10. The method for detecting the change of the RFID tag environment according to claim 9, wherein
a matching state of the impedance of the antenna and the impedance of the wireless communication IC changes, and the gain of the antenna changes according to the change of the characteristics of the element.

11. The method for detecting the change of the RFID tag environment according to claim 10, wherein the element is a temperature sensor including a PTC thermistor or an NTC thermistor attached to the antenna to be in parallel with the wireless communication IC.

12. A method for detecting a change of an RFID tag environment using an RFID tag, including an antenna and a wireless communication IC for transmitting and receiving radio waves through the antenna, a tag communication device for transmitting interrogation waves to the RFID tag and receiving answering waves from the RFID tag with respect to the interrogation waves, and a metal member removably attached to the antenna according to displacement of a member attached with the antenna; the detection method comprising the steps of:
having the RFID tag to a state of transmitting and to a state of not transmitting the answering wave with respect to the interrogation wave from the tag communication device when the gain of the antenna changes by attachment and detachment of the metal member to the antenna; and
monitoring the answering wave from the RFID tag and detecting the change of the RFID tag environment from presence of reception of the answering wave.
